Europäisches Patentamt

European Patent Office

Office européen des brevets

(11) Numéro de publication: **0 246 954 B1**

# FASCICULE DE BREVET EUROPEEN

(45) Date de publication de fascicule du brevet:
**24.07.91**

(51) Int. Cl.⁵: **B62D 5/083**

(21) Numéro de dépôt: **87401080.4**

(22) Date de dépôt: **14.05.87**

(54) **Distributeur hydraulique rotatif et procédé d'assemblage d'un tel distributeur.**

(30) Priorité: **22.05.86 ES 555202**

(43) Date de publication de la demande:
**25.11.87 Bulletin 87/48**

(45) Mention de la délivrance du brevet:
**24.07.91 Bulletin 91/30**

(84) Etats contractants désignés:
**DE FR GB IT**

(56) Documents cités:
**EP-A- 0 095 415      DE-A- 2 016 252**
**FR-A- 2 171 716      FR-A- 2 486 897**
**US-A- 4 417 651      US-A- 4 488 475**

(73) Titulaire: **BENDIX ESPANA S.A.**
**Balmès 243 Apartado 9556**
**E-08080 Barcelona 6(ES)**

(72) Inventeur: **Mansilla, Narciso Anguera**
**Calle Galileo 337 6 4a**
**Barcelona 28(ES)**

(74) Mandataire: **Timoney, Ian Charles Craig et al**
**BENDIX FRANCE Division Technique Service**
**Brevets Bendix Europe 126, rue de Stalin-**
**grad**
**F-93700 Drancy(FR)**

## Description

La présente invention concerne les distributeurs hydrauliques rotatifs, du type comprenant un rotor, couplé à rotation à un organe d'entrée et monté à rotation entre des faces axialement en regard d'un premier et d'un second éléments de stator assemblés, sous précontrainte axiale, par au moins un élément d'assemblage allongé s'étendant axialement dans des ouvertures traversantes alignées des premier et second éléments de stator, l'élément d'assemblage comportant, à une première extrémité, un épaulement annulaire coopérant en appui avec une surface d'appui de l'élément de stator adjacent.

Un distributeur hydraulique de ce type, est décrit dans le document EP-A-0 095 415, au nom de la demanderesse, dont le contenu est supposé intégré ici pour référence. Dans les distributeurs hydrauliques connus de ce type, les premier et second éléments de stator sont assemblés coaxialement au moyen d'au moins un boulon dont la tête forme ledit épaulement annulaire coopérant en appui avec l'élément de stator adjacent, et dont l'extrémité filetée est vissée dans l'ouverture traversante de l'autre élément de stator, qui doit être taraudée en conséquence. Un tel agencement se révèle relativement onéreux, tant en ce qui concerne la fabrication des éléments mis en oeuvre (boulon, taraudage de l'ouverture traversante d'un des élément de stator) qu'en ce qui concerne l'assemblage du distributeur qui est un ensemble relativement fragile, nécessitant de ce fait une main d'oeuvre hautement qualifiée, compte tenu notamment de la précision requise pour les couples de serrage. En raison des pressions de fluide très élevées mises en jeu dans de tels distributeurs et pour assurer un assemblage de stator exempt de fuites, les filets du boulon et de l'ouverture taraudée doivent d'autre part être de pas fin et s'étendre sur une distance axiale relativement importante, ce qui pose des problèmes non seulement de précision mais également de tenue mécanique dans la mesure où les éléments de stator sont le plus souvent réalisés en métal fritté. Pour ces mêmes raisons, la solution, un moment envisagée, d'assembler les éléments de stator par rivetage de l'élément d'assemblage a dû être écartée, en raison du manque de précision quant à l'application d'une précontrainte déterminée sur les éléments de stator et de la faible tenue mécanique du matériau constitutif de l'élément d'assemblage susceptible d'en permettre le rivetage.

La présente invention a précisément pour objet de proposer un distributeur hydraulique rotatif du type sus-mentionné, de construction robuste, précise et fiable, et de coûts de fabrication et d'assemblage considérablement réduits.

Pour ce faire, selon une caractéristique de l'invention, l'élément d'assemblage comporte une seconde extrémité faisant saillie axialement, en position d'assemblage, par rapport à une surface d'appui radiale de l'élément de stator adjacent et formée avec une rainure périphérique, avantageusement profilée, dans laquelle une bague métallique est montée à force avec déformation radiale de façon à exercer une contrainte axiale sur ladite surface d'appui de l'élément de stator adjacent et, partant une précontrainte axiale sur les deux éléments de stator verrouillés entre l'épaulement annulaire et la bague insérée dans la rainure.

Selon une caractéristique plus particulière de l'invention, entre la bague et la surface d'appui de l'élément de stator adjacent est interposé un anneau d'appui enfilé préalablement sur la seconde extrémité de l'élément d'assemblage et répercutant sur la surface d'appui de l'élément de stator adjacent la contrainte axiale exercée par la bague métallique montée à force dans la rainure périphérique.

La présente invention a corrélativement pour objet de proposer un procédé d'assemblage simple, rapide et sûr d'un tel distributeur hydraulique, comprenant les étapes d'introduire l'élément d'assemblage dans les ouvertures alignées des premier et second éléments de stator avec son épaulement annulaire en appui contre la surface d'appui de l'élément de stator adjacent, de positionner un appui fixe axial contre la première extrémité de l'élément d'assemblage, de placer la bague sur la seconde extrémité de l'élément d'assemblage sensiblement en recouvrement de la rainure périphérique de la seconde extrémité de l'élément d'assemblage, puis d'appliquer un effort combiné axial et radial sur la bague pour la monter à déformation dans la rainure.

D'autres caractéristiques et avantages de la présente invention ressortiront de la description suivante de modes de réalisation, donnés à titre illustratif, mais nullement limitatif, faite en relation avec les dessins annexés, sur lesquels :
- la figure 1 est une vue schématique en coupe longitudinale d'un distributeur hydraulique selon l'invention ;
- la figure 2 montre un premier mode de réalisation du sous-ensemble d'assemblage selon l'invention ;
- les figures 3 et $3_a$ montrent un second mode de réalisation du sous-ensemble d'assemblage selon l'invention ; et
- la figure 4 est une vue schématique illustrant le procédé d'assemblage selon l'invention en mettant en oeuvre le sous-ensemble d'assemblage de la figure 2.

Dans la description qui va suivre et sur les dessins, les éléments identiques ou analogues portent les même chiffres de référence, éventuellement indicés.

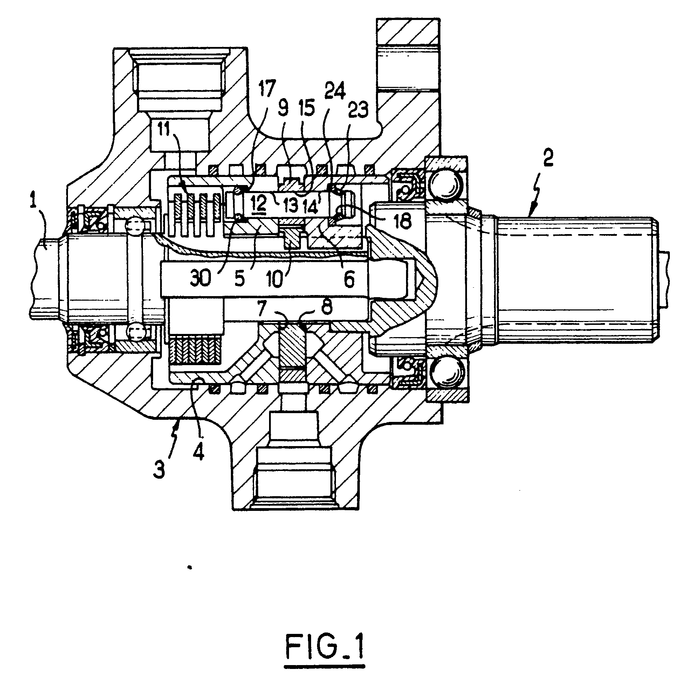

On reconnaît sur la figure 1 un distributeur hydraulique rotatif, plus particulièrement pour système de direction assistée de véhicule, du type décrit dans le document EP-A-0 095 415 susmentionné. Ce distributeur hydraulique comprend essentiellement, dans le mode de réalisation représenté, un arbre d'entrée 1 et un arbre de sortie 2 coaxiaux, tourillonnant dans un boîtier 3 et destinés, respectivement, à être reliés à un volant de direction et à une crémaillère de sortie (non représentés). Dans un alésage coaxial 4 du boîtier est monté à rotation un ensemble de stator, couplé à rotation à l'arbre de sortie 2, et constitué d'un premier élément de stator 5 et d'un second élément de stator 6 coaxiaux et axialement adjacents, assemblés, d'une façon qui sera décrite plus avant, de façon à ménager entre eux, entre deux faces axialement en regard 7 et 8, un espace de forme sensiblement discoïdale, d'extension axiale déterminée, par exemple par un élément d'entretoise intermédiaire 9, dans lequel est monté à rotation et à coulissement un rotor discoïde en forme d'étoile 10 tel que décrit dans le document EP-A-0 095 415 sus-mentionné, couplé en rotation à l'arbre d'entrée 1. Les arbres d'entrée 1 et de sortie 2 sont par ailleurs couplés l'un à l'autre par un dispositif de rappel et de centrage élastique formant accouplement à course morte angulaire constitué par un jeu de ressorts en C 11, avantageusement tels que décrits dans la demande de brevet Espagnole N° 554,415 (ES 37), disposé typiquement, comme représenté, entre l'arbre d'entrée 1 et une prolongation axiale du premier élément de stator 5 entourant l'arbre d'entrée 1.

Conformément à l'invention, les premier et second éléments de stator 5 et 6 sont assemblés coaxialement sous précontrainte axiale au moyen d'au moins un, typiquement trois éléments d'assemblage ou tirants 12 en matériau à haute résistance à la traction, par exemple en acier, présentant une partie principale cylindrique reçue dans des ouvertures axialement alignées 13 et 14 des éléments de stator (et 15 de l'élément d'entretoise lorsque celui-ci est constitué d'une pièce distincte des premier et second éléments de stator).

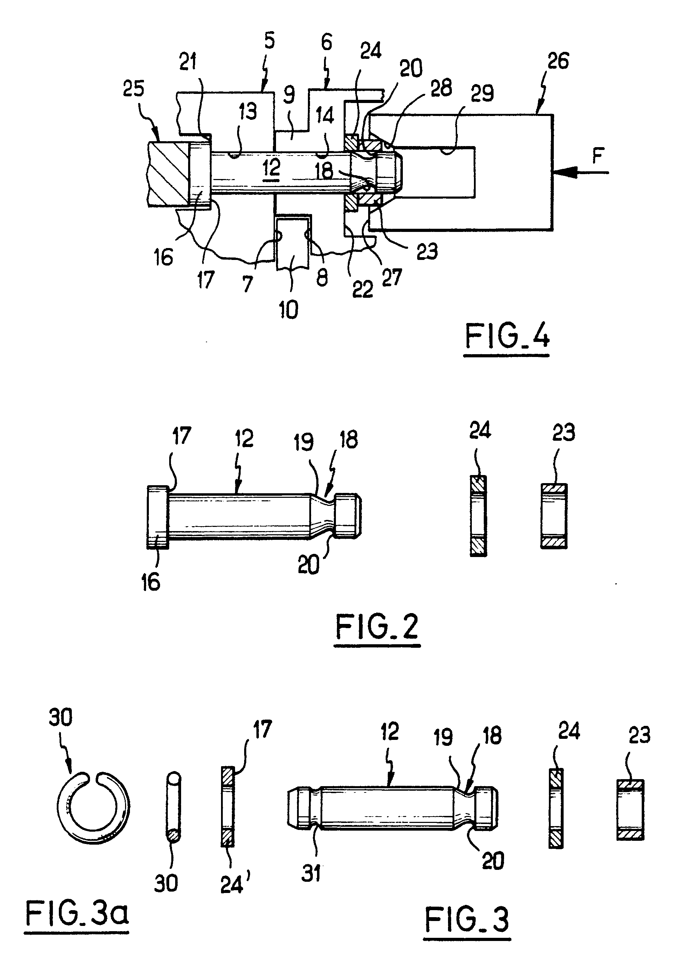

Dans le mode de réalisation représenté sur la figure 2, l'élément d'assemblage 12 comporte une tête d'extrémité 16 définissant un épaulement annulaire 17 faisant face à la seconde extrémité de l'élément d'assemblage 12, laquelle comporte une rainure périphérique 18 présentant typiquement, du côté de la portion de fût cylindrique de l'élément d'assemblage, une surface 19 convergeant dans la direction vers la seconde extrémité de l'élément d'assemblage 12 et se raccordant, par un petit arrondi, à un épaulement radial annulaire 20 faisant face à l'épaulement annulaire 17 de la tête 16.

Comme on le voit sur la figure 4, les éléments de stator 5 et 6 sont agencés de façon que les ouvertures axiales traversantes 13 et 14 débouchent vers l'extérieur dans des surfaces d'appui s'étendant dans des plans radiaux parallèles 21 et 22, respectivement, l'élément d'assemblage 12 étant dimensionné de façon que, lorsque l'épaulement annulaire 17 est en appui contre la surface d'appui (21) de l'élément de stator adjacent (5), la seconde extrémité de l'élément d'assemblage 12 fasse saillie axialement hors de la face d'appui (22) de l'autre élément de stator (6), la rainure annulaire 18 étant, dans la configuration d'assemblage, située entièrement à l'extérieur de cette face d'appui adjacente (22).

Conformément à l'invention, l'assemblage des éléments de stator 5 et 6 est assuré, via l'élément d'assemblage 12, au moyen d'une bague 23 destinée à être montée à force avec déformation radiale dans la rainure 18. De préférence, une rondelle ou anneau d'appui 24 est préalablement enfilé sur la seconde extrémité de l'assemblage 12, en contact contre la surface d'appui 22, de façon que, dans la configuration initiale d'assemblage telle que représentée sur la figure 4, l'anneau d'appui 24 recouvre légèrement, axialement, une partie de la surface convergente 19 de la rainure 18. La bague 23, réalisée typiquement en acier doux à faible teneur en carbone, a une dimension axiale initiale qui correspond sensiblement à l'extension axiale de la rainure 18. De ce fait, en raison de la présence de l'anneau d'appui 24, lorsque la bague 23 est mise en place sur la seconde extrémité de l'élément d'assemblage 12, en appui contre l'anneau d'appui 24, l'extrémité droite (sur la figure 4) de la bague 23 est décalée vers la droite de l'épaulement 20.

Le procédé d'assemblage selon l'invention va maintenant être décrit en relation avec la figure 4. Les éléments de stator 5 et 6 (et 9, le cas échéant) sont positionnés axialement après mise en place préalable du rotor 10 avec les ouvertures 13 et 14 (et 15 le cas échéant) alignées. L'élément d'assemblage 12 est alors introduit dans ces ouvertures. L'ensemble est positionné devant un contre-appui immobilisable axialement 25 en appui contre la tête 16 avec l'épaulement annulaire 17 en appui contre la surface d'appui (21) de l'élément de stator adjacent (5). Sur la seconde extrémité en saillie de l'élément d'assemblage 12 sont alors mis en place l'anneau d'appui 24 puis la bague 23 dans la configuration représentée sur la figure 4. Le contre-appui 25 étant maintenu immobilisé, un effort axial dans le sens de la flèche F est alors exercé sur un mandrin 26 comportant, à partir de sa face d'extrémité active 27, une surface de rampe convergeant vers l'intérieur 28 débouchant dans un alésage interne 29 de diamètre légèrement supérieur au diamètre nominal de la partie cylindrique de l'élément d'assemblage 12. En déplaçant (d'une distance axiale déterminée) le mandrin 26 dans le sens de la flèche F, les surfaces de rampe 28 provoquent une compression axiale de la bague 23 contre l'anneau d'appui 24 (et, partant, de l'ensemble de l'élément de stator) avec refoulement de la portion adjacente (sur la droite sur la figure 1) de la bague 23 dans la rainure 18 jusqu'à provoquer un ancrage de l'extrémité extérieure (droite sur la figure 4) de la bague contre l'épaulement annulaire 20 de la rainure 18, assurant la mise sous tension du tirant 12 et son maintien sous cette tension, après quoi le mandrin 26 et la pièce de contre-appui 25 sont retirés.

On a représenté sur les figures 3 un second mode de réalisation du sous-ensemble d'assemblage selon l'invention (également représenté sur la figure 1) où, afin de réduire encore les coûts de production, l'épaulement annulaire 17 à la première extrémité de l'élément d'assemblage 12 est constitué ici par un anneau d'appui 24', identique à l'anneau d'appui 24 précédemment décrit, retenu axialement sur la première extrémité de l'élément d'assemblage 12 par un anneau élastique fendu 30 monté dans une rainure périphérique 31 de dimension correspondante formée dans la première extrémité de l'élément d'assemblage 12, lequel peut être ainsi aisément obtenu par simple tronçonnage et contournage d'une tige d'acier à haute résistance mécanique.

## Revendications

1. Distributeur hydraulique, comprenant : un rotor (10), couplé à rotation à un organe d'entrée (1) et monté à rotation entre dans des faces axialement en regard (7,8) d'un premier (5) et d'un second (6) éléments de stator assemblés sous précontrainte axiale par au moins un élément d'assemblage allongé (12) s'étendant axialement dans des ouvertures traversantes alignées (13,14) des premier et second éléments de stator, l'élément d'assemblage (12) comportant, à une première extrémité, un épaulement annulaire (17) coopérant en appui avec une surface d'appui (21) de l'élément de stator adjacent (5), caractérisé en ce que l'élément d'assemblage (12) comprend une seconde extrémité faisant saillie axialement, en position d'assemblage, par rapport à une surface d'appui radiale (22) de l'élément de stator adjacent (6) et comportant une rainure périphérique (18) dans laquelle une bague métallique (23) est montée à force avec déformation radiale de façon à exercer une contrainte axiale sur la surface d'appui (22) de l'élément de stator adjacent (6).

2. Distributeur selon la revendication 1, caractérisé en ce qu'il comporte un anneau d'appui (24) interposé entre la bague (23) et la surface d'appui (22) de l'élément de stator adjacent (6).

3. Distributeur selon la revendication 1 ou la revendication 2, caractérisé en ce que la rainure périphérique (18) présente une surface (19) convergeant dans la direction opposée à la première extrémité de l'élément d'assemblage (12) et se raccordant à un épaulement radial annulaire (20) faisant face vers ladite première extrémité.

4. Distributeur selon l'une des revendications 1 à 3, caractérisé en ce que l'épaulement annulaire (17) à la première extrémité de l'élément d'assemblage (12) est formé par une tête d'extrémité (16) solidaire de l'élément d'assemblage.

5. Distributeur selon l'une des revendications 1 à 3, caractérisé en ce que l'épaulement annulaire (17) à la première extrémité de l'élément d'assemblage (12) est formé par un anneau d'appui (24') rapporté sur l'élément d'assemblage et maintenu sur celui-ci par un anneau de retenue (30) monté dans une rainure périphérique (31) formée dans la première extrémité de l'élément d'assemblage (12).

6. Distributeur selon l'une des revendications 1 à 5, caractérisé en ce qu'il comprend un élément d'entretoise (9) interposé entre les premier (5) et second (6) éléments de stator et traversé (15) par l'élément d'assemblage (12).

7. Procédé d'assemblage d'un distributeur hydraulique selon l'une des revendications 1 à 6, caractérisé en ce qu'il comprend les étapes suivantes :
   - introduire l'élément d'assemblage (12) dans les ouvertures alignées (13,14) des éléments de stator (5,6) avec l'épaulement annulaire (17) en appui contre la surface d'appui (21) de l'élément de stator adjacent (5) ;
   - positionner un appui fixe axial (25) contre la première extrémité de l'élément d'assemblage (12) ;
   - placer la bague (23) sur la seconde extrémité de l'élément d'assemblage ; et
   - appliquer un effort combiné axial et radial sur la bague (23) pour la monter à déformation dans la rainure (18) de la seconde extrémité de l'élément d'assemblage.

8. Procédé selon la revendication 7, caractérisé en ce que l'effort combiné axial et radial est appliqué sur la bague (23) par un mandrin (26) à déplacement axial comportant une surface de rampe annulaire (28).

9. Procédé selon la revendication 7 ou la revendication , caractérisé en ce que la bague (23) est en acier doux.

## Claims

1. Hydraulic distributor comprising: a rotor (10) coupled in rotation to an input member (1) and mounted in rotation between axially opposite faces (7, 8) of a first (5) and second (6) stator elements, which elements are assembled under axial prestress by at least one elongated assembly element (12) extending axially in aligned through openings (13, 14) of the first and second stator elements, the assembly element (12) comprising, at a first end, an annular shoulder (17) interacting, bearing against it, with a bearing surface (21) of the adjacent stator element (5), characterised in that the assembly element (12) comprises a second end projecting axially, in the assembled position, relative to a radial bearing surface (22) of the adjacent stator element (6) and comprising a peripheral groove (18) into which a metal collar (23) is force-fitted with radial deformation so as to exert an axial stress on the bearing surface (22) of the adjacent stator element (6).

2. Distributor according to Claim 1, characterised in that it comprises a bearing ring (24) inserted between the collar (23) and the bearing surface (22) of the adjacent stator element (6).

3. Distributor according to Claim 1 or Claim 2, characterised in that the peripheral groove (18) has a surface (19) converging in a direction away from the first end of the assembly element (12) and joined to an annular radial shoulder (20) facing towards the said first end.

4. Distributor according to one of Claims 1 to 3, characterised in that the annular shoulder (17) at the first end of the assembly element (12) is formed by an end head (16) integral with the assembly element.

5. Distributor according to one of Claims 1 to 3, characterised in that the annular shoulder (17) at the first end of the assembly element (12) is formed by a bearing ring (24') attached to the assembly element and held thereon by a retention ring (30) fitted in a peripheral groove (31) formed in the first end of the assembly element (12).

6. Distributor according to one of Claims 1 to 5, characterised in that it comprises a spacer element (9) inserted between the first (5) and second (6) stator elements and traversed (15) by the assembly element (12).

7. Process for assembling a hydraulic distributor according to one of Claims 1 to 6, characterised in that it comprises the following stages:
    - introducing the assembly element (12) into the aligned openings (13, 14) of the stator elements (5, 6) with the annular shoulder (17) bearing against the bearing surface (21) of the adjacent stator element (5);
    - positioning an axial fixed support (25) against the first end of the assembly element (12);
    - placing the collar (23) on the second end of the assembly element; and
    - applying a combined axial and radial force to the collar (23) in order to fit it, by deformation, into the groove (18) of the second end of the assembly element.

8. Process according to Claim 7, characterised in that the combined axial and radial force is applied to the collar (23) by an axially displaceable chuck (26) comprising an annular inclined surface (28).

9. Process according to Claim 7 or Claim 8, characterised in that the collar (23) is made from low carbon steel.

## Patentansprüche

1. Hydraulikverteiler, mit einem Rotor (10), der drehbar an ein Einlaßelement (1) gekoppelt und zwischen in axialer Richtung einander gegenüberliegenden Flächen (7, 8) eines ersten (5) und eines zweiten (6) Statorelements drehbar angebracht ist, wobei die Statorelemente unter axialer Vorspannung durch wenigstens ein gestrecktes Montageelement (12), das sich in axialer Richtung durch ausgerichtete Durchgangsbohrungen (13, 14) des ersten und des zweiten Statorelements erstreckt, montiert werden, wobei das Montageelement (12) an einem ersten Ende einen ringförmigen Ansatz (17) aufweist, der mit einer Abstützfläche (21) des benachbarten Statorelements (5) sich darauf abstützend zusammenwirkt, dadurch gekennzeichnet, daß das Montageelement (12) ein zweites Ende umfaßt, das in der montierten Position in bezug auf eine radiale Abstützfläche (22) des benachbarten Statorelements (6) in axialer Richtung vorsteht und eine periphere Rille (18) aufweist, in der ein metallischer Ring (23) unter Krafteinwirkung und radialer Verformung angebracht wird, derart, daß auf die Abstützfläche (22) des benachbarten Statorelements (6) eine axiale Spannung ausgeübt wird.

2.  Verteiler gemäß Anspruch 1, dadurch gekennzeichnet, daß er einen Abstützring (24) aufweist, der zwischen den Ring (23) und die Abstützfläche (22) des benachbarten Statorelements (6) eingesetzt ist.

3.  Verteiler gemäß Anspruch 1 oder Anspruch 2, dadurch gekennzeichnet, daß die periphere Rille (18) eine Oberfläche (19) aufweist, die sich in der zum ersten Ende entgegengesetzten Richtung des Montageelements (12) verjüngt und mit einem ringförmigen, radialen Ansatz (20) verbunden ist, der dem ersten Ende gegenüberliegt.

4.  Verteiler gemäß einem der Ansprüche 1 bis 3, dadurch gekennzeichnet, daß der ringförmige Ansatz (17) am ersten Ende des Montageelements (12) von einem einteilig mit dem Montageelement ausgebildeten Abschlußkopf (16) gebildet wird.

5.  Verteiler gemäß einem der Ansprüche 1 bis 3, dadurch gekennzeichnet, daß der ringförmige Ansatz (17) am ersten Ende des Montageelements (12) durch einen Stützring (24') gebildet wird, der am Montageelement angestückt und auf diesen mittels eines Halterings (30) gehalten wird, der in einer peripheren Rille (31), die am ersten Ende des Montageelements (12) ausgebildet ist, angebracht ist.

6.  Verteiler gemäß einem der Ansprüche 1 bis 5, dadurch gekennzeichnet, daß er ein Abstandselement (9) umfaßt, das zwischen das erste (5) und das zweite (6) Statorelement eingesetzt ist und vom Montageelement (12) durchsetzt (15) wird.

7.  Montageverfahren für einen Hydraulikverteiler gemäß einem der Ansprüche 1 bis 6, dadurch gekennzeichnet, daß es die folgenden Schritte umfaßt:
    -   Einführen des Montageelements (12) in die ausgerichteten Bohrungen (13, 14) der Statorelemente (5, 6), wobei der ringförmige Ansatz (17) gegen die Abstützfläche (21) des benachbarten Statorelements (5) gestützt wird;
    -   Positionieren einer axialen, festen Stütze (25) am ersten Ende des Montageelements (12);
    -   Anordnen des Rings (23) am zweiten Ende des Montageelements; und
    -   Anlegen einer sowohl axialen als auch radialen Belastungskraft an den Ring (23), um ihn durch Verformung in der Rille (18) des zweiten Endes des Montageelements anzubringen.

8.  Verfahren gemäß Anspruch 7, dadurch gekennzeichnet, daß die sowohl axiale als auch radiale Belastungskraft auf den Ring (23) mittels eines Dorns (26) zur axialen Verschiebung, der eine ringförmige, schräge Oberfläche aufweist, ausgeübt wird.

9.  Verfahren gemäß Anspruch 7 oder Anspruch 8, dadurch gekennzeichnet, daß der Ring (23) aus Flußstahl ist.

FIG.1

7

FIG_4

FIG_2

FIG_3a

FIG_3

8